# EUROPÄISCHE PATENTSCHRIFT

(11) **EP 0 882 069 B1**
(45) Veröffentlichungstag und Bekanntmachung des Hinweises auf die Patenterteilung: **25.04.2001**
(21) Anmeldenummer: 97903321.4
(22) Anmeldetag: 19.02.1997
(51) Int. Cl.: C08F 2/14, C08F 10/00, C08F 4/60

(54) **VERFAHREN ZUR HERSTELLUNG VON POLYMERISATEN VON ALKENEN DURCH SUSPENSIONSPOLYMERISATION**
PROCESS FOR PRODUCING POLYMERS OF ALKENES BY SUSPENSION POLYMERISATION
PROCEDE DE PRODUCTION DE POLYMERES D'ALCENES PAR POLYMERISATION EN SUSPENSION

(30) Priorität: 20.02.1996 DE 19606166
(43) Veröffentlichungstag der Anmeldung: 09.12.1998
(73) Patentinhaber: BASF AKTIENGESELLSCHAFT, 67056 Ludwigshafen (DE)
(72) Erfinder: LYNCH, John, D-67590 Monsheim (DE); FISCHER, David, D-67161 Gönnheim (DE); GÖRTZ, Hans-Helmut, D-67251 Freinsheim (DE); SCHWEIER, Günther, D-67159 Friedelsheim (DE)
(86) Internationale Anmeldenummer: EP9700771
(87) Internationale Veröffentlichungsnummer: WO9731029

(56) Entgegenhaltungen:
- EP-A- 0 500 944
- EP-A- 0 589 638
- EP-A- 0 628 574
- WO-A-95/15815

## Beschreibung

Die vorliegende Erfindung betrifft Verfahren zur Herstellung von Polymerisaten von Alkenen durch Suspensionspolymerisation in Gegenwart von Katalysatorsystemen.

Weiterhin betrifft die vorliegende Erfindung die hierbei erhältlichen Polymerisate von Alkenen, die Verwendung dieser Polymerisate zur Herstellung von Fasern, Folien und Formkörpern sowie die daraus erhältlichen Fasern, Folien und Formkörper.

Ein Herstellungsverfahren für Polymerisate des Ethylens durch Suspensionspolymerisation ist beispielsweise in der WO 95/18160 beschrieben. Hierbei ist jedoch der trockene Katalysator pyrophor und schon polymerisationsaktiv.

Aus der WO 91/09882 ist die Herstellung eines geträgerten, kationischen Metallocen-Katalysators durch Aufbringen der Reaktionsmischung eines Dialkylmetallocens mit einer ionischen Verbindung, die als Kation eine Brönsted-Säure und als Anion ein nicht-koordinierendes Gegenion wie Tetrakis(pentafluorphenyl)borat besitzt, auf einen anorganischen Träger bekannt. Auch hierbei wird ein aktiver Katalysator erhalten.

Ähnliche geträgerte Katalysatorsysteme sind auch aus der WO 94/03506 und der WO 95/14044 bekannt.

In der EP-A 628 574 sind geträgerte Katalysatorsysteme beschrieben, bei denen ein Metallocendihalogenid in Anwesenheit eines Boronats mit einem Aluminiumalkyl umgesetzt und diese polymerisationsaktive Lösung auf einen Träger aufgebracht wird.

Solche schon aktive Katalysatoren führen leicht zu Problemen bei der Dosierung des Katalysators in den Reaktor.

Vorteilhaft ist daher ein noch inaktiver Katalysator, der erst zu einem späteren Zeitpunkt, beispielsweise bei der Dosierung oder auch erst im Reaktor, aktiviert werden kann.

Aus der EP-A 613 908 sind geträgerte Metallocenkatalysatorsysteme bekannt, die teilweise erst im Reaktor aktiviert werden. Hierbei weisen jedoch die entstehenden Polymerisate eine breite Molekulargewichtsverteilung M_{w}/Mₙ auf.

Die WO 95/15815 beschreibt Katalysatoren, die durch Trägerung eines Metallocendichlorids und eines Borats auf einem vernetzten Polymer erhalten werden. Die Verwendung von desaktivierten anorganischen Trägern liefert Katalysatoren, die nach der Aktivierung im Polymerisationsreaktor entweder nur eine geringe oder gar keine Aktivität mehr aufweisen. Hierbei wurde eine Lösung der metalloceniumbildenden Verbindung zu einer trockenen Mischung aus desaktiviertem anorganischen Träger und Metallocenkomplex gegeben.

Gegenstand der EP-A 589 638 sind pulverförmige Katalysatorzusammensetzungen, bei denen eine Lösung oder Dispersion einer Übergangsmetallverbindung (Subkomponente i) und einer Verbindung, die diese in ein Kation überführen kann, (Subkomponente ii) in einem Kohlenwasserstoff (wobei diese Lösung oder Dispersion als Komponente B bezeichnet wird) mit einer feinteiligen anorganischen Verbindung (Komponente A) überzogen ist. Der mittlere Teilchendurchmesser der Komponente A liegt im Bereich von 0,003 bis 1 µm. Es entstehen Partikel, die im Inneren eine Flüssigkeit aufweisen und deren Oberfläche von den festen Teilchen der Komponente A gebildet wird.

Die EP-A 628 574 offenbart eine Katalysatorzusammensetzung aus einer Metallocenverbindung, einer ionisierenden ionischen Verbindung, einer Organometallverbindung und einem anorganischen Oxid, auf dessen Oberfläche OH-Gruppen durch Halogen ersetzt wurden. Der Metallocenkomplex, die ionisierende ionische Verbindung und die Organometallverbindung werden bevorzugt zusammen auf den vorbehandelten Träger gegeben.

Die EP-A 500 944 beschreibt ein Katalysatorsystem, das durch Umsetzung einer halogenierten Metallocenverbindung mit einer Organometallverbindung und anschließende Kontaktierung mit einer Verbindung, die durch Reaktion mit diesem Umsetzungsprodukt in ein stabiles Anion überführt wird, erhalten wird.

Aufgabe der vorliegenden Erfindung war es daher, ein Verfahren zur Herstellung von Polymerisaten von Alkenen durch Suspensionspolymerisation zur Verfügung zu stellen, welches die genannten Nachteile nicht aufweist, bei dem insbesondere das Katalysatorsystem zu einem beliebigen Zeitpunkt aktivierbar ist, das Katalysatorsystem luft- und feuchtigkeitsunempfindlich ist, lange gelagert werden kann, nicht pyrophor ist und wobei die entstehenden Polymerisate eine enge Molekulargewichtsverteilung aufweisen.

Demgemäß wurde ein Verfahren zur Herstellung von Polymerisaten von Alkenen durch Suspensionspolymerisation in Gegenwart von Katalysatorsystemen gefunden, welches dadurch gekennzeichnet ist, daß als Katalysatorsysteme geträgerte Katalysatorsysteme erhältlich durch
A) Umsetzung eines anorganischen Trägermaterials, welches ein feinteiliger Feststoff ist, dessen Teilchendurchmesser im Bereich von 1 bis 200 µm liegen, mit einer Metallverbindung der allgemeinen Formel I

   M¹(R¹)ᵣ(R²)ₛ(R³)ₜ(R⁴)ᵤ I

   in der
   - M1: ein Alkali-, ein Erdalkalimetall oder ein Metall der III. oder IV. Hauptgruppe des Periodensystems bedeutet,
   - R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R² bis R⁴: Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
   - r: eine ganze Zahl von 1 bis 4
   und
   - s, t und u: ganze Zahlen von 0 bis 3 bedeuten, wobei die Summe r+s+t+u der Wertigkeit von M¹ entspricht,
B) Umsetzung des nach A) erhaltenen Materials mit dem Umsetzungsprodukt aus mindestens einem Metallocenkomplex in seiner Metalldihalogenid-Form und einer metalloceniumionenbildenden Verbindung
   und
C) anschließender Umsetzung mit einer Metallverbindung der allgemeinen Formel II

   M²(R⁵)ₒ(R⁶)ₚ(R⁷)_{q} II

   in der
   - M²: ein Alkali-, ein Erdalkalimetall oder ein Metall der III. Hauptgruppe des Periodensystems bedeutet,
   - R⁵: Wasserstoff, C₁- bis C₁₀-Alkyl, C6- bis C₁₅-Aryl, Alkylaryl oder Arylalkyl mit jeweils 1 bis 10 C-Atomen im Alkylrest und 6 bis 20 C-Atomen im Arylrest,
   - R⁶ und R⁷: Wasserstoff, Halogen, C₁- bis C₁₀-Alkyl, C6- bis C₁₅-Aryl, Alkylaryl, Arylalkyl oder Alkoxy mit jeweils 1 bis 10 C-Atomen im Alkylrest und 6 bis 20 C-Atomen im Arylrest,
   - o: eine ganze Zahl von 1 bis 3
   und
   - p und q: ganze Zahlen von 0 bis 2 bedeuten, wobei die Summe o+p+q der Wertigkeit von M² entspricht
   eingesetzt werden.

Außerdem wurden die hierbei erhältlichen Polymerisate von Alkenen gefunden, deren Verwendung zur Herstellung von Fasern, Folien und Formkörpern sowie die daraus erhältlichen Fasern, Folien und Formkörper.

Das erfindungsgemäße Verfahren wird zur Herstellung von Polymerisaten von Alkenen verwendet. Unter dem Begriff Polymerisate werden sowohl Homo- als auch Copolymerisate verstanden. Geeignete Alkene sind insbesondere Alk-1-ene, vorzugsweise Ethylen und Propylen, insbesondere Ethylen. Als Comonomere sind ebenfalls Alk-1-ene besonders geeignet, vorzugsweise unverzweigte C₄- bis C₁₀-Alk-1-ene, insbesondere But-1-en, Hex-1-en und Oct-1-en. Es können aber auch andere Alkene eingesetzt werden, beispielsweise Cycloolefine oder höhere Alkene.

Bei dem erfindungsgemäßen Verfahren werden geträgerte Katalysatorsysteme eingesetzt, die dadurch erhältlich sind, daß in einer ersten Stufe A) ein anorganisches Trägermaterial mit einer Metallverbindung der allgemeinen Formel I umgesetzt wird.

Als Trägermaterialien werden feinteilige Feststoffe eingesetzt, deren Teilchendurchmesser im Bereich von 1 bis 200 µm liegen, insbesondere 30 bis 70 µm.

Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Andere anorganische Verbindungen wie Al₂O₃ oder MgCl₂ oder diese Verbindungen enthaltende Mischungen können ebenfalls als Trägermaterialien eingesetzt werden.

Von den Metallverbindungen der allgemeinen Formel I sind diejenigen bevorzugt, bei denen M¹ für ein Metall der III. Hauptgruppe des Periodensystems steht, insbesondere für Aluminium, R¹ für C₁- bis C₁₀-Alkyl und R² bis R⁴ für C₁- bis C₁₀-Alkyl. Für den besonders bevorzugten Fall, daß M¹ für Aluminium steht, ist u Null und die Reste R¹ bis R³ weisen insbesondere die gleiche Bedeutung auf, vorzugsweise Methyl, Ethyl, iso-Butyl oder Hexyl, bevorzugt iso-Butyl.

Vorzugsweise wird die Metallverbindung der allgemeinen Formel I als Lösung zu einer Suspension des Trägers gegeben. Als Lösungs- bzw. Suspensionsmittel sind insbesondere Kohlenwasserstoffe wie Heptan geeignet. Die Menge an Metallverbindung I kann in weiten Grenzen variieren, die Mindestmenge richtet sich nach der Anzahl der Hydroxygruppen des Trägers. Die Temperaturen, Reaktionszeiten und Drücke sind an sich unkritisch, bevorzugt sind Temperaturen von 0 bis 80°C und Reaktionszeiten von 0,1 bis 48 Stunden.

Es hat sich als geeignet erwiesen, nach der Trägervorbehandlung die überschüssige Metallverbindung I durch Auswaschen, beispielsweise mit Kohlenwasserstoffen wie Pentan oder Hexan, zu entfernen und den Träger zu trocknen.

Das so hergestellte Material ist bis zu 6 Monaten lagerbar und nicht pyrophor.

Dieses Material wird nun in einer weiteren Stufe B) mit einem Metallocenkomplex in seiner Metalldihalogenid-Form und einer metalloceniumionenbildenden Verbindung umgesetzt.

Als Metallocenkomplexe eignen sich beispielsweise folgende Verbindungen der allgemeinen Formel III: 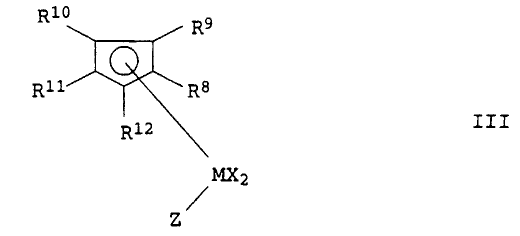 in der die Substituenten folgende Bedeutung haben:
- M: Titan, Zirkonium, Hafnium, Vanadium, Niob oder Tantal,
- X: Fluor, Chlor, Brom oder Iod,
- R⁸ bis R¹²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können oder Si(R¹³)₃ mit
- R¹³: C₁- bis C₁₀-Alkyl, C₃- bis C₁₀-Cycloalkyl oder C₆- bis C₁₅-Aryl,
- Z: für X oder 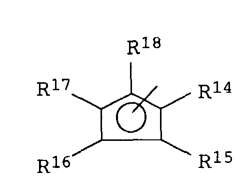 steht,
wobei die Reste
- R¹⁴ bis R¹⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
- R¹⁹: C₁- bis C₁₀-Alkyl, C₆- bis C₁₅-Aryl oder C₃- bis C₁₀-Cycloalkyl,
oder wobei die Reste R¹¹ und Z gemeinsam eine Gruppierung -R²⁰-A-bilden, in der
- R²⁰: 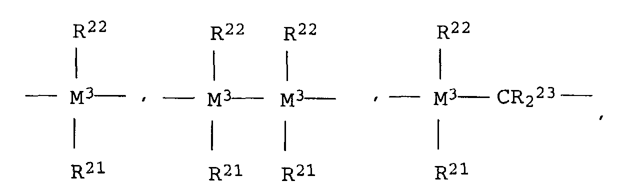 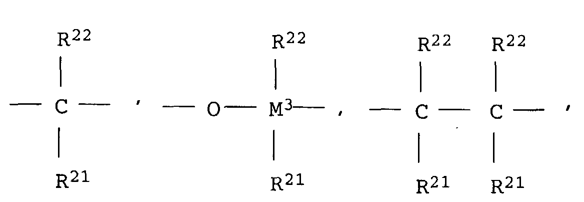 = BR²², = AlR²², -Ge-, -Sn-, -O-, -S-, = SO, = SO₂, = NR²², = CO, = PR²² oder = P(O)R²² ist,
- wobei R²¹, R²² und R²³: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M³: Silicium, Germanium oder Zinn ist,
- A: 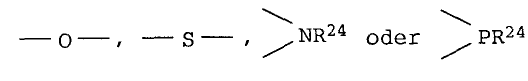 bedeuten, mit
- R²⁴: C₁- bis C₁₀-Alkyl, C₆- bis C₁₅-Aryl, C₃- bis C₁₀-Cycloalkyl, Alkylaryl oder Si(R²⁵)₃,
- R²⁵: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R¹¹ und R¹⁷ gemeinsam eine Gruppierung -R²⁰-bilden.

Von den Metallocenkomplexen der allgemeinen Formel III sind 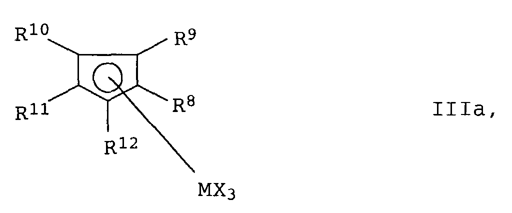 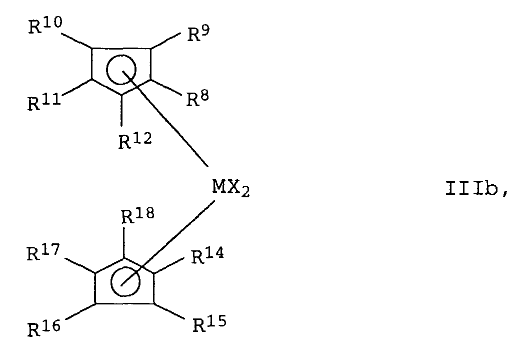 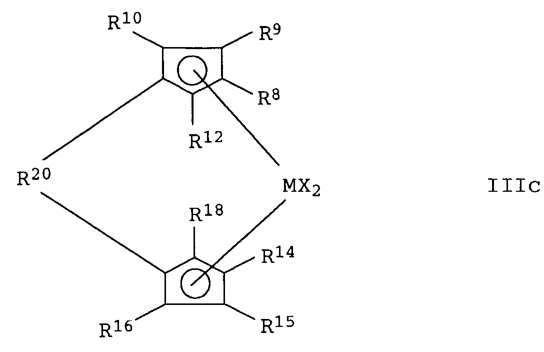 und 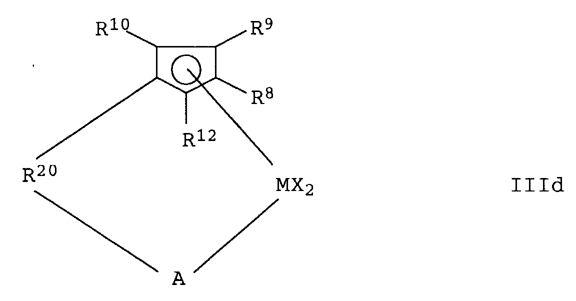 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium,
- X: Chlor und
- R⁸ bis R¹²: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: für Chlor,
- R⁸ bis R¹²: Wasserstoff, C₁- bis C₄-Alkyl oder Si(R¹³)₃,
- R¹⁴ bis R¹⁸: Wasserstoff, C₁- bis C₄-Alkyl oder Si(R¹⁹)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl) zirkoniumdichlorid,
Bis(pentamethylcyclopentadienyl)-zirkoniumdichlorid,
Bis(methylcyclopentadienyl)-zirkoniumdichlorid,
Bis (ethylcyclopentadienyl) -zirkoniumdichlorid,
Bis (n-butylcyclopentadienyl) -zirkoniumdichlorid und
Bis(trimethylsilylcyclopentadienyl) -zirkoniumdichlorid.

Von den Verbindungen der Formel IIIc sind diejenigen besonders geeignet, in denen
- R⁸ und R¹⁴: gleich sind und für Wasserstoff oder C₁- bis C₁₀-Alkylgruppen stehen,
- R¹² und R¹⁸: gleich sind und für Wasserstoff, eine Methyl-, Ethyl-, iso-Propyl- oder tert.-Butylgruppe stehen
- R⁹, R¹⁰, R¹⁵: und R¹⁶ die Bedeutung
R¹⁰ und R¹⁶ C₁- bis C₄-Alkyl
R⁹ und R¹⁵ Wasserstoff
haben oder zwei benachbarte Reste R⁹ und R¹⁰ sowie R¹⁵ und R¹⁶ gemeinsam für 4 bis 12 C-Atome aufweisende cvclische Gruppen stehen,
- R²⁰: für 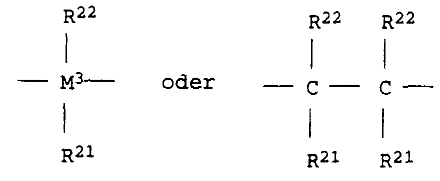 steht,
- M: für Titan, Zirkonium oder Hafnium und
- X: für Chlor stehen.

Beispiele für besonders geeignete Komplexverbindungen sind u.a.
Dimethylsilandiylbis (cyclopentadienyl)-zirkoniumdichlorid,
Dimethylsilandiylbis (indenyl)-zirkoniumdichlorid,
Dimethylsilandiylbis(tetrahydroindenyl) -zirkoniumdichlorid,
Ethylenbis (cyclopentadienyl)-zirkoniumdichlorid,
Ethylenbis(indenyl)-zirkoniumdichlorid,
Ethylenbis (tetrahydroindenyl) -zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl) -zirkoniumdichlorid,
Dimethylsilandiylbis (-2-isopropylindenyl) -zirkoniumdichlorid,
Dimethylsilandiylbis (-2-tert.butylindenyl) -zirkoniumdichlorid,
Diethylsilandiylbis(-2-methylindenyl)-zirkoniumdibromid,
Dimethylsilandiylbis (-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis (-2-methylindenyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Bei den Verbindungen der allgemeinen Formel IIId sind als besonders geeignet diejenigen zu nennen, in denen
- M: für Titan oder Zirkonium,
- X: für Chlor stehen,
- R²⁰: für 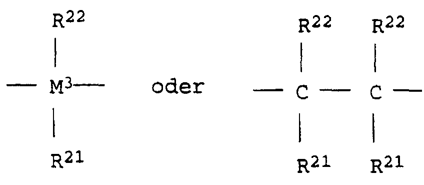 steht,
- A: für 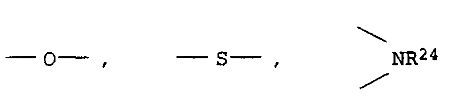
und
- R⁸ bis R¹⁰ und R¹²: für Wasserstoff, C₁- bis C₁₀-Alkyl, C₃- bis C₁₀-Cycloalkyl, C₆- bis C₁₅-Aryl oder Si(R¹⁴)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M⁴X¹X²X³ IV

bevorzugt, in der
- M⁴: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das l,l'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex III.

Die Bedingungen für die Umsetzung des Metallocenkomplexes mit der metalloceniumionenbildenden Verbindung sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Hierzu wird nun das nach A) hergestellte Material gegeben. Eine Menge von 0,1 bis 10 Gew.-% an Metallocenkomplex, bezogen auf das anorganische Trägermaterial ist besonders geeignet. Die Bedingungen für diese Umsetzung sind ebenfalls nicht kritisch, Temperaturen im Bereich von 20 bis 80°C und Reaktionszeiten im Bereich von 0,1 bis 20 Stunden haben sich als besonders geeignet erwiesen.

Das nach B) erhaltene Material kann nun isoliert werden und ist bis zu mindestens 6 Monaten lagerbar.

In einer weiteren Stufe C), der Aktivierungsstufe, wird das nach B) erhaltene Material mit einer Metallverbindung der allgemeinen Formel II umgesetzt. Diese Aktivierung kann zu einem beliebigen Zeitpunkt, d.h. vor, bei oder nach der Dosierung des nach B) erhaltenen Materials in den Reaktor, erfolgen. Vorzugsweise erfolgt die Aktivierung nach der Dosierung des nach B) erhaltenen Materials in den Reaktor.

Von den Metallverbindungen der allgemeinen Formel II

M²(R⁵)ₒ(R⁶)ₚ(R⁷)_{q} II

in der
- M²: ein Alkali-, ein Erdalkalimetall oder ein Metall der III. Hauptgruppe des Periodensystems, d.h. Bor, Aluminium, Gallium, Indium oder Thallium bedeutet,
- R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- o: eine ganze Zahl von 1 bis 3
und
- p und q: ganze Zahlen von 0 bis 2 bedeuten, wobei die Summe o+p+q der Wertigkeit von M² entspricht,
sind diejenigen Verbindungen bevorzugt, in denen
- M²: Lithium, Magnesium oder Aluminium bedeutet und
- R⁵ bis R⁷: für C₁- bis C₁₀-Alkyl stehen.

Besonders bevorzugte Metallverbindungen der allgemeinen Formel II sind n-Butyl-Lithium, n-Butyl-n-octyl-Magnesium, n-Butyl-n-heptyl-Magnesium und Tri-n-hexyl-aluminium.

Die Bedingungen für die Umsetzung in Stufe C) sind an sich unkritisch. Temperaturen, Reaktionszeiten und Drücke richten sich nach dem Zeitpunkt der Umsetzung, d.h. Aktivierung.

Die Suspensionspolymerisation ist an sich bekannt. Üblicherweise geht man so vor, daß man in einem Suspensionsmittel, vorzugsweise in einem Alkan polymerisiert. Die Polymerisationstemperaturen liegen i.a. im Bereich von -20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifreaktoren, gearbeitet werden. Insbesondere kann nach dem Phillips-PF-Verfahren, wie in der US-A 3 242 150 und US-A 3 248 179 beschrieben, gearbeitet werden.

Bei den erfindungsgemäßen Verfahren gibt es keinerlei Probleme mit Wandbelägen und Brockenbildung. Die eingesetzten Katalysatorsysteme sind zu einem beliebigen Zeitpunkt aktivierbar, können lange gelagert werden und sind nicht pyrophor. Zudem entstehen Polymerisate mit enger Molekulargewichtsverteilung, die sich zur Herstellung von Fasern, Folien und Formkörpern eignen.

### Beispiele

### Beispiele 1 und 2: Umsetzung von SiO₂ mit Aluminium-tri-iso-butyl (Stufe A))

### Beispiel 1

100 g SiO₂ (SG 332 der Fa. Grace; 12 Stunden bei 200°C getrocknet) wurden in 1 1 trockenem Heptan suspendiert. Bei Raumtemperatur wurden 140 ml einer 2-molaren Lösung von Aluminium-tri-iso-butyl in Heptan innerhalb von 30 Minuten zugetropft, wobei die Temperatur auf 35°C anstieg. Anschließend wurde über Nacht gerührt, der Feststoff abfiltriert und zweimal mit Pentan gewaschen. Dann wurde im Ölpumpenvakuum bis zur Gewichtskonstanz getrocknet (Träger 1).

### Beispiel 2

50 g SiO₂ (ES 70F der Fa. Crosfield; 7 Stunden bei 110°C im Vakuum getrocknet) wurden in 500 ml trockenem Heptan suspendiert. Bei Raumtemperatur wurden 70 ml einer 2-molaren Lösung von Aluminium-tri-iso-butyl in Heptan innerhalb von 30 Minuten zugetropft, wobei die Temperatur auf 35°C anstieg. Anschließend wurde über Nacht gerührt, der Feststoff abfiltriert und mit Heptan gewaschen. Dann wurde im Ölpumpenvakuum bis zur Gewichtskonstanz getrocknet (Träger 2).

### Beispiel 3 Umsetzung mit Metallocenkomplex und N,N-Dimethylanilinium-tetrakis(pentafluorphenyl)borat (Stufe B))

0,5 mmol des jeweiligen Metallocenkomplexes und jeweils 0,5 mmol N,N-Dimethylanilinium-tetrakis(pentafluorphenyl)borat wurden in 50 ml absolutem Toluol bei 80°C gelöst. Hierzu wurden jeweils 5 g des nach Beispiel 1 oder 2 erhaltenen Materials gegeben und die so erhaltene Dispersion 30 Minuten bei 80°C gerührt. Danach wurde das Lösungsmittel bei 10 mbar abgezogen und der feste Rückstand im Ölpumpenvakuum getrocknet, bis ein gut rieselfähiges Pulver zurückblieb.

Eingesetzte Metallocenkomplexe:
III 1: Bis (cyclopentadienyl)zirkoniumdichlorid
III 2: Bis (n-butylcyclopentadienyl) zirkoniumdichlorid
III 3: Bis (trimethylsilylcyclopentadienyl)zirkoniumdichlorid
III 4: Dimethylsilandiylbis(indenyl)zirkoniumdichlorid
III 5: Dimethylsilandiylbis(-2-methylbenzindenyl)zirkoniumdichlorid
III 6: Dimethylsilandiyl (N-tert.-butylamido) (η⁵-2,3,4,5-tetramethylcyclopentadienyl)titandichlorid

### Beispiele 4 bis 17: Herstellung von Polyethylen in Suspension

Ein 1 l-Stahlautoklav wurde auf 70°C aufgeheizt, dann wurde die entsprechende Metallverbindung II durch eine Schleuse mit 20 ml i-Butan eingespritzt. Anschließend wurde Ethylen bis zu einem Druck von 40 bar in den Autoklav eingeleitet und eine entsprechende Menge des in Beispiel 3 hergestellten Materials mit Ethylen eingeblasen. Die Polymerisation wurde bei 70°C durchgeführt, bis 200 g Ethylen aufgenommen waren und durch Entspannen abgebrochen.

Eingesetzte Metallverbindungen II:
II 1: Tri-n-hexyl-aluminium
II 2: n-Butyl-n-Heptyl-Magnesium
II 3: n-Butyl-Lithium

Über die jeweils eingesetzten Verbindungen und die Eigenschaften der Polyethylene gibt die nachfolgende Tabelle 1 Auskunft.

Die Grenzviskosität η wurde nach ISO 1628/3 bestimmt.

**Tabelle 1:**

| Bsp. | Träger | Metallocenkomplex | eingesetzte Menge des nach Bsp.3 hergest. Materials [mg] | Metallverbindung | Produktivität [g Polymer/g Katalysator]^{*)} | η [dl/g] |
|---|---|---|---|---|---|---|
| 4 | 1 | III 1 | 107 | 180 mg II 1 | 1495 | 3,75 |
| 5 | 2 | III 1 | 68 | 168 mg II 1 | 3970 | 4,04 |
| 6 | 2 | III 1 | 88 | 80 mg II 2 | 3460 | 4,06 |
| 7 | 1 | III 2 | 66 | 40 mg II 3 | 2560 | 3,97 |
| 8 | 2 | III 2 | 98 | 80 mg II 2 | 3010 | 4,24 |
| 9 | 2 | III 2 | 54 | 40 mg II 3 | 4900 | 4,05 |
| 10 | 1 | III 3 | 83 | 80 mg II 3 | 228 | 6,34 |
| 11 | 1 | III 4 | 116 | 20 mg II 3 | 1422 | 2,43 |
| 12 | 2 | III 4 | 41 | 60 mg II 2 | 4580 | 2,89 |
| 13 | 2 | III 5 | 94 | 80 mg II 2 | 2660 | 2,11 |
| 14 | 1 | III 6 | 140 | 60 mg II 2 | 2210 | 24,8 |
| 15 | 1 | III 6 | 81 | 20 mg II 3 | 2690 | 22,89 |
| 16 | 1 | III 6 | 250 | 40 mg II 3 | 506 | 21,2 |
| 17 | 1 | III 6 | 197 | 80 mg II 2 | 535 | 20,22 |

| | | | | | | |
|---|---|---|---|---|---|---|
| *) Katalysator bedeutet das nach Stufe B) erhaltene Produkt | | | | | | |

## Patentansprüche

1. Verfahren zur Herstellung von Polymerisaten von Alkenen durch Suspensionspolymerisation in Gegenwart von Katalysatorsystemen, dadurch gekennzeichnet, daß als Katalysatorsysteme geträgerte Katalysatorsysteme, erhältlich durch
A) Umsetzung eines anorganischen Trägermaterials, welches ein feinteiliger Feststoff ist, dessen Teilchendurchmesser im Bereich von 1 bis 200 µm liegen, mit einer Metallverbindung der allgemeinen Formel I
M¹(R¹)ᵣ(R²)ₛ(R³)ₜ(R⁴)ᵤ I
in der
M¹ ein Alkali-, ein Erdalkalimetall oder ein Metall der III. oder IV. Hauptgruppe des Periodensystems bedeutet,
R¹ Wasserstoff, C₁- bis C₁₀-Alkyl, C6- bis C₁₅-Aryl, Alkylaryl oder Arylalkyl mit jeweils 1 bis 10 C-Atomen im Alkylrest und 6 bis 20 C-Atomen im Arylrest,
R² bis R⁴ Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
r eine ganze Zahl von 1 bis 4
und
s, t und u ganze Zahlen von 0 bis 3 bedeuten, wobei die Summe r+s+t+u der Wertigkeit von M¹ entspricht,
B) Umsetzung des nach A) erhaltenen Materials mit dem Umsetzungsprodukt aus mindestens einem Metallocenkomplex in seiner Metalldihalogenid-Form und einer metalloceniumionenbildenden Verbindung
C) anschließender Umsetzung mit einer Metallverbindung der allgemeinen Formel II
M²(R⁵)ₒ(R⁶)ₚ(R⁷)_{q} II
in der
M² ein Alkali-, ein Erdalkalimetall oder ein Metall der III. Hauptgruppe des Periodensystems bedeutet,
R⁵ Wasserstoff, C₁ - bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R⁶ und R⁷ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
o eine ganze Zahl von 1 bis 3
und
p und q ganze Zahlen von 0 bis 2 bedeuten, wobei die Summe o+p+q der Wertigkeit von M² entspricht,
eingesetzt werden.

2. Verfahren nach Anspruch 1, dadurch gekennzeichnet, daß das nach A) erhaltene Material isoliert und getrocknet wird.

3. Verfahren nach den Ansprüchen 1 bis 2, dadurch gekennzeichnet, daß in der allgemeinen Formel I M¹ für Aluminium, die Reste R¹ bis R³ für C₁- bis C₁₀-Alkyl und u für Null stehen.

4. Verfahren nach den Ansprüchen 1 bis 3, dadurch gekennzeichnet, daß als metalloceniumionenbildende Verbindung eine Koordinationskomplexverbindung ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

5. Verfahren nach den Ansprüchen 1 bis 4, dadurch gekennzeichnet, daß in der allgemeinen Formel II die Reste R⁵ bis R⁷ für C₁- bis C₁₀-Alkyl stehen.

6. Verfahren nach den Ansprüchen 1 bis 5 zur Herstellung von Polymerisaten des Ethylens.

7. Polymerisate von Alkenen, erhältlich nach dem Verfahren gemäß den Ansprüchen 1 bis 6.

8. Verwendung von Polymerisaten von Alkenen gemäß Anspruch 7 zur Herstellung von Fasern, Folien und Formkörpern.

9. Fasern, Folien und Formkörper, enthaltend Polymerisate von Alkenen gemäß Anspruch 7 als wesentliche Komponente.

## Claims

1. A process for the preparation of polymers of alkenes by suspension polymerization in the presence of catalyst systems, wherein the catalyst systems used are supported catalyst systems obtainable by
A) reaction of an inorganic carrier, which is a finely divided solid whose particle diameter is from 1 to 200 µm, with a metal compound of the formula I
M¹(R¹)ᵣ(R²)ₛ(R³)ₜ(R⁴)ᵤ I
where
M¹ is an alkali metal, an alkaline earth metal or a metal of main group III or IV of the Periodic Table,
R¹ is hydrogen, C₁-C₁₀-alkyl, C₆-C₁₅-aryl, alkylaryl or arylalkyl, each having 1 to 10 carbon atoms in the alkyl radical and 6 to 20 carbon atoms in the aryl radical,
R² to R⁴ are each hydrogen, halogen, C₁-C₁₀-alkyl, C₆-C₁₅-aryl, alkylaryl, arylalkyl, alkoxy or dialkylamino, each having 1 to 10 carbon atoms in the alkyl radical and 6 to 20 carbon atoms in the aryl radical,
r is an integer from 1 to 4
and
s, t and u are integers from 0 to 3, the sum r+s+t+u corresponding to the valency of M¹,
B) reaction of the material obtained according to A) with the reaction product of at least one metallocene complex in its metal dihalide form and a compound forming metallocenium ions
and
C) subsequent reaction with a metal compound of the formula II
M²(R⁵)ₒ(R⁶)ₚ(R⁷)_{q} II
in which
M² is an alkali metal, an alkaline earth metal or a metal of main group III of the Periodic Table,
R⁵ is hydrogen, C₁-C₁₀-alkyl, C₆-C₁₅-aryl, alkylaryl or arylalkyl, each having 1 to 10 carbon atoms in the alkyl radical and 6 to 20 carbon atoms in the aryl radical,
R⁶ and R⁷ are each hydrogen, halogen, C₁-C₁₀-alkyl, C₆-C₁₅-aryl, alkylaryl, arylalkyl or alkoxy, each having 1 to 10 carbon atoms in the alkyl radical and 6 to 20 carbon atoms in the aryl radical,
o is an integer from 1 to 3
and
p and q are integers from 0 to 2, the sum o+p+q corresponding to the valency of M².

2. A process as claimed in claim 1, wherein the material obtained according to A) is isolated and dried.

3. A process as claimed in claims 1 and 2, wherein, in the formula I, M¹ is aluminum, R¹ to R³ are each C₁-C₁₀-alkyl and u is zero.

4. A process as claimed in any of claims 1 to 3, wherein a coordination complex compound selected from the group consisting of the strong, neutral Lewis acids, the ionic compounds having Lewis acid cations and the ionic compounds having Brönsted acids as cations is used as the compound forming metallocenium ions.

5. A process as claimed in any of claims 1 to 4, wherein, in the formula II, R⁵ to R⁷ are each C₁-C₁₀-alkyl.

6. A process as claimed in any of claims 1 to 5 for the preparation of polymers of ethylene.

7. A polymer of alkenes, obtainable by a process as claimed in any of claims 1 to 6.

8. The use of polymers of alkenes as claimed in claim 7 for the production of fibers, films and moldings.

9. A fiber, film or molding containing polymers of alkenes as claimed in claim 7 as essential components.

## Revendications

1. Procédé de préparation de polymères d'alcènes par polymérisation en suspension en présence de systèmes catalytiques,
caractérisé en ce que, comme systèmes catalytiques, on met en oeuvre des systèmes catalytiques sur support, que l'on peut obtenir par
A) réaction d'une matière de support inorganique, qui est une matière solide finement divisée, dont les diamètres de particules sont de l'ordre de 1 à 200 µm, avec un composé métallique de la formule générale I :
M¹(R¹)ᵣ(R²)ₛ(R³)ₜ(R⁴)ᵤ I
dans laquelle
M¹ représente un métal alcalin, un métal alcalino-terreux ou un métal du groupe principal III ou IV du système périodique,
R¹ représente de l'hydrogène ou un groupe alkyle en C₁-C₁₀, aryle en C₆-C₁₅, alkylaryle ou arylalkyle, avec chaque fois 1 à 10 atomes de C dans le radical alkyle et 6 à 20 atomes de C dans le radical aryle,
R² à R⁴ représentent de l'hydrogène, un halogène, ou un groupe alkyle en C₁-C₁₀, aryle en C₆-C₁₅, alkylaryle, arylalkyle, alcoxy ou dialkylamino, avec chaque fois 1 à 10 atomes de C dans le radical alkyle et 6 à 20 atomes de C dans le radical aryle,
r est un nombre entier de 1 à 4, et
s, t et u représentent des nombres entiers de 0 à 3, la somme de r+s+t+u correspondant à la valence de M¹,
B) réaction de la matière obtenue selon A) avec le produit de réaction d'au moins un complexe de métallocène sous sa forme de dihalogénure métallique et d'un composé générateur d'ions métallocénium,
et
C) réaction ultérieure avec un composé métallique de la formule générale II :
M²(R⁵)ₒ(R⁶)ₚ(R⁷)_{q} II
dans laquelle
M² représente un métal alcalin, un métal alcalino-terreux ou un métal du groupe principal III du système périodique,
R⁵ représente de l'hydrogène ou un groupe alkyle en C₁-C₁₀, aryle en C₆-C₁₅, alkylaryle ou arylalkyle, avec chaque fois 1 à 10 atomes de C dans le radical alkyle et 6 à 20 atomes de C dans le radical aryle,
R⁶ et R⁷ représentent de l'hydrogène, un halogène, ou un groupe alkyle en C₁-C₁₀, aryle en C₆-C₁₅, alkylaryle, arylalkyle ou alcoxy, avec chaque fois 1 à 10 atomes de C dans le radical alkyle et 6 à 20 atomes de C dans le radical aryle,
o est un nombre entier de 1 à 3, et
p et q représentent des nombres entiers de 0 à 2, la somme de o+p+q correspondant à la valence de M².

2. Procédé suivant la revendication 1, caractérisé en ce que la matière obtenue selon A) est isolée et séchée.

3. Procédé suivant l'une des revendications 1 et 2,
caractérisé en ce que, dans la formule générale I, M¹ représente de l'aluminium et les radicaux R¹ à R³ un groupe alkyle en C₁ à C₁₀, et u est égal à zéro.

4. Procédé suivant l'une des revendications 1 à 3,
caractérisé en ce que, comme composé générateur d'ions métallocénium, on met en oeuvre un composé complexe de coordination choisi parmi le groupe des acides de Lewis neutres, forts, des composés ioniques avec des cations d'acides de Lewis et des composés ioniques avec des acides de Brönsted comme cations.

5. Procédé suivant l'une des revendications 1 à 4,
caractérisé en ce que, dans la formule générale II, les radicaux R⁵ à R⁷ représentent un groupe alkyle en C₁-C₁₀.

6. Procédé suivant l'une des revendications 1 à 5, pour la préparation de polymères de l'éthylène.

7. Polymères d'alcènes, que l'on peut obtenir selon le procédé suivant l'une des revendications 1 à 6.

8. Utilisation de polymères d'alcènes suivant la revendication 7 pour la préparation de fibres, de feuilles et de corps façonnés.

9. Fibres, feuilles et corps façonnés, contenant des polymères d'alcènes suivant la revendication 7, comme composants essentiels.
